# EUROPEAN PATENT APPLICATION

(11) **EP 4 817 918 A1**
(43) Date of publication of application: **07.10.2026**
(21) Application number: 26153721.1
(22) Date of filing: 23.01.2026
(51) Int. Cl.: B60K 1/04, B62D 21/15

(54) **VEHICLE UNDERBODY STRUCTURE**

(30) Priority: 31.03.2025 JP 2025059229
(71) Applicant: Toyota Jidosha Kabushiki Kaisha, Toyota-shi, Aichi-ken 471-8571 (JP)
(72) Inventor: NISHIKI, Nobuyasu, Toyota-shi, Aichi-ken, 471-8571 (JP)
(74) Representative: TBK

(57) **Abstract**

A vehicle underbody structure includes: a battery case that houses a battery module; a reinforcing member provided to sandwich an outer wall portion of the battery case in a vehicle width direction from an inside and an outside; and a support bracket including one end attached to a portion of the reinforcing member that is provided outward of the battery case and the other end attached to a support of a vehicle body to support the battery case. The support bracket has a lower bending rigidity than the reinforcing member.

## Description

### BACKGROUND OF THE INVENTION

### 1. Field of the Invention

The present invention relates to a vehicle underbody structure.

### 2. Description of Related Art

Hitherto, there has been known a vehicle underbody structure in which one end of a bracket is connected to a battery unit (battery case) disposed below a floor panel and the other end of the bracket is connected to a rocker via a side frame (see, for example, Japanese Unexamined Patent Application Publication No. 2022-150169 (JP 2022-150169 A)).

### SUMMARY OF THE INVENTION

In the above configuration, however, the rocker and the bracket are close to each other. Therefore, the allowable entry amount of a collisional member that enters from the outside in a vehicle width direction is small. Since no reinforcing members etc. are provided for the battery case, a load that is input to the bracket from the outside in the vehicle width direction and is not absorbed in terms of energy by deformation of the bracket is transmitted to the battery case. Therefore, the battery case may be deformed.

In view of the above, an object of the present invention is to provide a vehicle underbody structure that can secure an allowable entry amount for a collisional member that enters from the outside in a vehicle width direction and can suppress deformation of a battery case.

In order to achieve the above object, a vehicle underbody structure according to a first aspect of the present invention includes: a battery case that houses a battery module; a reinforcing member provided to sandwich an outer wall portion of the battery case in a vehicle width direction from an inside and an outside; and a support bracket including one end attached to a portion of the reinforcing member that is provided outward of the battery case and the other end attached to a support of a vehicle body to support the battery case. The support bracket has a lower bending rigidity than the reinforcing member.

According to the first aspect of the invention, the reinforcing member is provided to sandwich the outer wall portion of the battery case housing the battery module in the vehicle width direction from the inside and the outside. The battery case is supported by attaching the one end of the support bracket to the portion of the reinforcing member that is provided outward of the battery case and the other end of the support bracket to the support of the vehicle body.

The support bracket has a lower bending rigidity than the reinforcing member. Therefore, when a collisional member that enters from the outside in the vehicle width direction collides with the support bracket, the support bracket is deflected to the side opposite to the entry side, and the battery case is moved to the side opposite to the entry side. Thus, an allowable entry amount of the collisional member that enters from the outside in the vehicle width direction is secured, and the impact is absorbed, thereby suppressing deformation of the battery case.

In a vehicle underbody structure according to a second aspect of the present invention, in the vehicle underbody structure according to the first aspect, in a sectional view in a vehicle front-rear direction, the reinforcing member has a substantially rectangular closed sectional shape that sandwiches the outer wall portion of the battery case in the vehicle width direction.

According to the second aspect of the invention, in the sectional view in the vehicle front-rear direction, the reinforcing member has the substantially rectangular closed sectional shape that sandwiches the outer wall portion of the battery case in the vehicle width direction. Therefore, the rigidity of the reinforcing member is secured, and the battery case is effectively moved to the side opposite to the entry side.

In a vehicle underbody structure according to a third aspect of the present invention, in the vehicle underbody structure according to the first or second aspect, the support is located inward of a rocker in the vehicle width direction, and the support bracket includes a vertical wall portion with a normal direction corresponding to the vehicle width direction.

According to the third aspect of the invention, the support is located inward of the rocker in the vehicle width direction, and the support bracket includes the vertical wall portion with the normal direction corresponding to the vehicle width direction. That is, a space is secured outward of the vertical wall portion in the vehicle width direction. Therefore, even if the collisional member that enters from the outside in the vehicle width direction collides with the vertical wall portion of the support bracket, outward deflection in the vehicle width direction is not hindered in a vertical wall portion of a support bracket opposite to that support bracket, and the battery case is effectively moved to the side opposite to the entry side.

As described above, according to the present invention, it is possible to secure the allowable entry amount for the collisional member that enters from the outside in the vehicle width direction and can suppress deformation of the battery case.

### BRIEF DESCRIPTION OF THE DRAWINGS

Features, advantages, and technical and industrial significance of exemplary embodiments of the invention will be described below with reference to the accompanying drawings, in which like signs denote like elements, and wherein:
FIG. 1 is a schematic rear view showing a vehicle underbody structure according to an embodiment; and
FIG. 2 is a schematic rear view showing a state in which a fork of a forklift has collided with the vehicle underbody structure according to the embodiment.

### DETAILED DESCRIPTION OF EMBODIMENTS

An embodiment of the present invention will be described in detail below with reference to the drawings. For ease of description, arrow UP shown in the drawings as appropriate indicates an upward direction of a vehicle, arrow FR indicates a forward direction of the vehicle, and arrow RH indicates a rightward direction of the vehicle. in the following description, the terms "upper," "lower," "front," "rear," "left," and "right" refer to the upper, lower, front, rear, left, and right sides of the vehicle unless otherwise specified. The right-left direction is synonymous with a vehicle width direction.

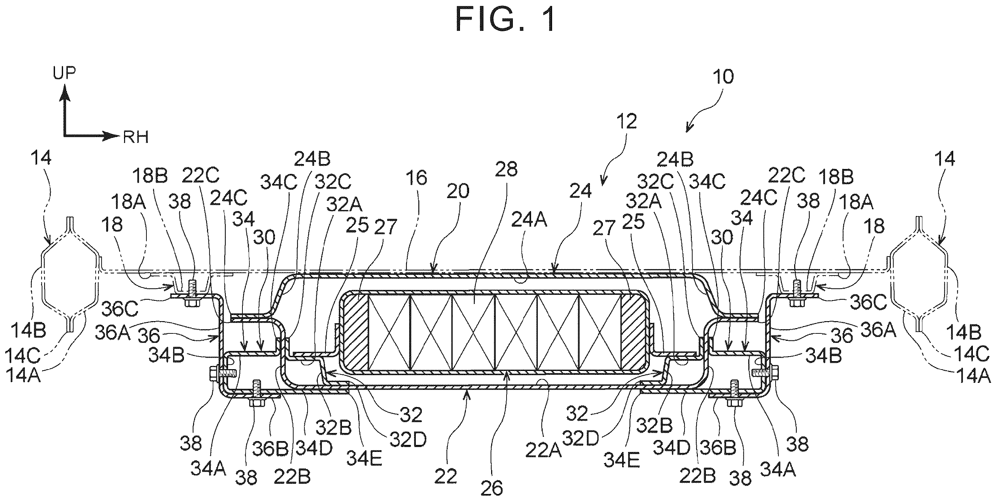

As shown in FIG. 1, a vehicle underbody structure 10 according to the present embodiment includes a battery case 20 mounted below a floor panel 16 of a vehicle 12. A pair of right and left rockers 14 is provided at the outer ends of the vehicle 12 in the vehicle width direction. The rocker 14 includes an inner panel 14A and an outer panel 14B each having a substantial hat shape when viewed in cross section in a front-rear direction (hereinafter simply referred to as "sectional view"). The upper and lower flange portions of the inner panel 14A and the upper and lower flange portions of the outer panel 14B are joined to each other to form a substantially rectangular closed sectional shape.

The outer ends of the floor panel 16 in the vehicle width direction are joined to the inner panels 14A of the rockers 14. The floor panel 16 is supported by the right and left rockers 14. When viewed in the front-rear direction (hereinafter referred to as "rear view"), the lower end of the battery case 20 (bottom wall 22A of a lower case 22 described later) is located downward of a lower end 14C of each rocker 14 (lower end of the lower flange portion), and the vehicle 12 has a small ground clearance.

Under members 18 serving as supports extending in the front-rear direction are attached to the lower surfaces of predetermined portions of the floor panel 16 located inward of the rockers 14 in the vehicle width direction. In the sectional view, each under member 18 has a substantial hat shape with an open top. A flange portion 18A integrally projecting outward and inward in the vehicle width direction from the upper end is attached by being joined to the lower surface of the floor panel 16.

The battery case 20 includes the lower case 22 and an upper case 24. The lower case 22 includes the bottom wall 22A, a peripheral wall 22B that is as a wall portion integrally erected on the peripheral edge of the bottom wall 22A, and a flange portion 22C projecting outward in the vehicle width direction from the upper end of the peripheral wall 22B. The upper case 24 includes a top wall 24A, a peripheral wall 24B integrally provided vertically on the peripheral edge of the top wall 24A, and a flange portion 24C projecting outward in the vehicle width direction from the lower end of the peripheral wall 24B.

The battery case 20 is formed in such a manner that the flange portion 24C of the upper case 24 and the flange portion 22C of the lower case 22 are vertically laid and joined to each other. The battery case 20 houses a battery module 26. The battery module 26 is formed by stacking a plurality of battery cells 28 in the vehicle width direction.

End plates 27 each having a predetermined thickness are disposed outward of the battery cells 28 in the vehicle width direction. The battery cells 28 are restrained in the vehicle width direction by the right and left end plates 27. Each end plate 27 may be made of metal or resin as long as it has high rigidity.

Reinforcing members 30 extending in the front-rear direction are provided on both sides of the lower case 22 of the battery case 20 in the vehicle width direction. Each reinforcing member 30 is provided to sandwich the peripheral wall 22B of the lower case 22 from the inside (inside of the battery case 20) and the outside (outside of the battery case 20). More specifically, the reinforcing member 30 is constituted by an inner reinforcement 32 provided inside the lower case 22 and an outer reinforcement 34 provided outside the lower case 22.

The inner reinforcement 32 includes a flat top wall 32A with its normal direction corresponding to the up-down direction in the rear view, a flat side wall 32B (with its normal direction corresponding to the vehicle width direction) integrally provided vertically from the inner end of the top wall 32A in the vehicle width direction, an upper flange portion 32C integrally erected from the outer end of the top wall 32A in the vehicle width direction, and a lower flange portion 32D integrally projecting inward in the vehicle width direction from the lower end of the side wall 32B.

The outer reinforcement 34 includes a flat top wall 34A with its normal direction corresponding to the up-down direction in the rear view, a flat side wall 34B (with its normal direction corresponding to the vehicle width direction) integrally provided vertically from the outer end of the top wall 34A in the vehicle width direction, an upper flange portion 34C integrally erected from the inner end of the top wall 34A in the vehicle width direction, and a flat bottom wall 34D (with its normal direction corresponding to the up-down direction) integrally projecting inward in the vehicle width direction from the lower end of the side wall 34B.

The top wall 32A of the inner reinforcement 32 and the top wall 34A of the outer reinforcement 34 are positioned at the same height. The upper flange portion 32C of the inner reinforcement 32 is joined to the inner surface of the peripheral wall 22B of the lower case 22 and the upper flange portion 34C of the outer reinforcement 34 is joined to the outer surface of the peripheral wall 22B such that the peripheral wall 22B is sandwiched between the upper flange portion 32C of the inner reinforcement 32 and the upper flange portion 34C of the outer reinforcement 34.

The lower flange portion 32D of the inner reinforcement 32 is joined to the inner surface of the bottom wall 22A of the lower case 22 and an inner end 34E of the bottom wall 34D of the outer reinforcement 34 in the vehicle width direction is joined to the outer surface of the bottom wall 22A such that the bottom wall 22A is sandwiched between the lower flange portion 32D of the inner reinforcement 32 and the inner end 34E of the bottom wall 34D of the outer reinforcement 34 in the vehicle width direction. Thus, the reinforcing member 30 has a substantially rectangular closed sectional shape in the sectional view while sandwiching the peripheral wall 22B of the lower case 22 of the battery case 20.

Flat module brackets 25 with their normal direction corresponding to the up-down direction are provided outward of the battery module 26 in the vehicle width direction. Each module bracket 25 is laid from the top and joined to the top wall 32A of the inner reinforcement 32. Therefore, the inner reinforcement 32 can be regarded as a support reinforcement that supports the battery module 26 via the module bracket 25. The outer reinforcement 34 can be regarded as an outer-side reinforcement that reinforces the outer side of the battery case 20 (lower case 22) in the vehicle width direction.

The outer reinforcement 34 of the reinforcing member 30 is connected to the floor panel 16 by a plurality of support brackets 36 provided at predetermined intervals in the front-rear direction. Each support bracket 36 includes a flat vertical wall portion 36A with its normal direction corresponding to the vehicle width direction in the rear view. The lower end (one end) of the vertical wall portion 36A is a lower flange portion 36B integrally projecting inward in the vehicle width direction.

The lower flange portion 36B is laid from the bottom on the bottom wall 34D of the outer reinforcement 34 of the reinforcing member 30 and fixed by fastening with a bolt 38. The lower portion of the vertical wall portion 36A is laid from the outside on the side wall 34B of the outer reinforcement 34 of the reinforcing member 30 and fixed by fastening with a bolt 38.

The upper end (other end) of the vertical wall portion 36A of each support bracket 36 is an upper flange portion 36C integrally projecting outward in the vehicle width direction. The upper flange portion 36C is laid from the bottom on a lower wall 18B of the under member 18 and fixed by fastening with a bolt 38. Thus, the battery case 20 is supported by the under member 18 (vehicle body) via the support bracket 36 and the reinforcing member 30 (outer reinforcement 34).

The support bracket 36 has a lower bending rigidity than the reinforcing member 30 (inner reinforcement 32 and outer reinforcement 34). That is, the support bracket 36 (vertical wall portion 36A) is more susceptible to deflection at least in the vehicle width direction than the reinforcing member 30, for example, by selecting a material and reducing the thickness.

Next, operations of the vehicle underbody structure 10 according to the present embodiment that is configured as described above will be described.

As described above, the inner reinforcement 32 and the outer reinforcement 34 of the reinforcing member 30 are provided to sandwich, from the inside and outside, the peripheral wall 22B of the lower case 22 of the battery case 20 that houses the battery module 26. The battery case 20 is supported by attaching the lower flange portion 36B of the support bracket 36 to the outer reinforcement 34 of the reinforcing member 30 and the upper flange portion 36C of the support bracket 36 to the under member 18 joined to the floor panel 16.

The under member 18 is located inward of the rocker 14 in the vehicle width direction. The support bracket 36 includes the vertical wall portion 36A with its normal direction corresponding to the vehicle width direction. That is, a predetermined space is secured outward of the vertical wall portion 36A in the vehicle width direction. The support bracket 36 (vertical wall portion 36A) has a lower bending rigidity than the reinforcing member 30.

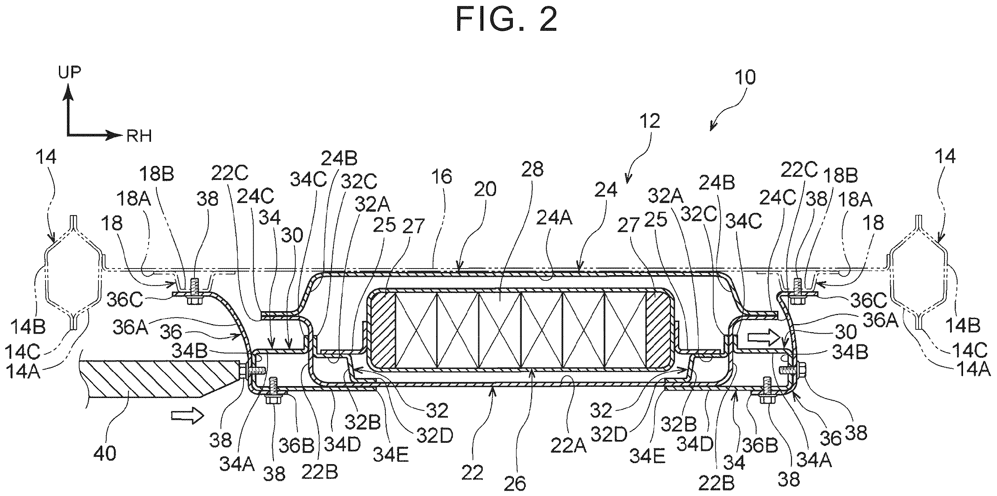

Therefore, even if a fork 40 of a forklift (not shown) that is an example of a collisional member that enters from the outside in the vehicle width direction collides with the vertical wall portion 36A of the support bracket 36 as shown in FIG. 2, the vertical wall portion 36A of each support bracket 36 can be deflected to the side opposite to the entry side, and the battery case 20 can be moved to the side opposite to the entry side (outward in the vehicle width direction) like a swing (see the outline arrow shown in FIG. 2).

That is, when the fork 40 that enters from the outside in the vehicle width direction collides with the vertical wall portion 36A of the support bracket 36, the vertical wall portion 36A of the support bracket 36 on the entry side is deflected inward in the vehicle width direction. The vertical wall portion 36A of the support bracket 36 on the side opposite to the entry side is deflected outward in the vehicle width direction without being hindered from the outward deflection in the vehicle width direction. Thus, the battery case 20 can escape to the side opposite to the entry side (outward in the vehicle width direction).

With the vehicle underbody structure 10 of the present embodiment, the battery case 20 can be effectively moved to the side opposite to the entry side (outward in the vehicle width direction), and the impact caused by the fork 40 can be absorbed. That is, according to the present embodiment, the allowable entry amount of the fork 40 that enters from the outside in the vehicle width direction can be secured by the deflection of the right and left support brackets 36, thereby suppressing or preventing deformation of the battery case 20.

Further, the reinforcing member 30 has the substantially rectangular closed sectional shape in the sectional view while sandwiching the peripheral wall 22B of the lower case 22 of the battery case 20. Therefore, the rigidity of the reinforcing member 30 can be secured (the reinforcing member 30 can be made less likely to deform), and the battery case 20 can be moved more effectively to the side opposite to the entry side (outward in the vehicle width direction). Thus, it is possible to more effectively suppress or prevent the deformation of the battery case 20.

While the vehicle underbody structure 10 according to the present embodiment has been described above with reference to the drawings, the vehicle underbody structure 10 according to the present embodiment is not limited to that shown in the drawings, and design changes can be made as appropriate without departing from the gist of the present invention. For example, the collisional member is not limited to the fork 40 of the forklift, but also includes members that may enter in the event of a side collision of the vehicle 12.

## Claims

1. A vehicle underbody structure comprising:
a battery case that houses a battery module;
a reinforcing member provided to sandwich an outer wall portion of the battery case in a vehicle width direction from an inside and an outside; and
a support bracket including one end attached to a portion of the reinforcing member that is provided outward of the battery case and the other end attached to a support of a vehicle body to support the battery case, wherein
the support bracket has a lower bending rigidity than the reinforcing member.

2. The vehicle underbody structure according to claim 1, wherein in a sectional view in a vehicle front-rear direction, the reinforcing member has a substantially rectangular closed sectional shape that sandwiches the outer wall portion of the battery case in the vehicle width direction.

3. The vehicle underbody structure according to claim 1 or 2, wherein the support is located inward of a rocker in the vehicle width direction, and the support bracket includes a vertical wall portion with a normal direction corresponding to the vehicle width direction.
